(19) Europäisches Patentamt
European Patent Office
Office européen des brevets

(11) **EP 4 756 478 A1**

(12) **EUROPEAN PATENT APPLICATION**
published in accordance with Art. 153(4) EPC

(43) Date of publication:
**10.06.2026 Bulletin 2026/24**

(21) Application number: **24849391.8**

(22) Date of filing: **02.07.2024**

(51) International Patent Classification (IPC):
*G01S 5/02* *(2010.01)*        *G01S 13/88* *(2006.01)*
*B60R 25/01* *(2013.01)*       *B60R 25/24* *(2013.01)*
*B62D 15/02* *(2006.01)*       *G01S 13/931* *(2020.01)*

(52) Cooperative Patent Classification (CPC):
**B60R 25/01; B60R 25/24; B62D 15/02; G01S 5/02;
G01S 13/88; G01S 13/931**

(86) International application number:
**PCT/KR2024/009285**

(87) International publication number:
**WO 2025/028820 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.08.2023  KR 20230100537**

(71) Applicant: **LG INNOTEK CO. LTD
Gangseo-gu
Seoul 07796 (KR)**

(72) Inventors:
• **KIM, Jang Seob
  Seoul 07796 (KR)**
• **BAE, Sung Jun
  Seoul 07796 (KR)**

(74) Representative: **Plasseraud IP
104 Rue de Richelieu
CS92104
75080 Paris Cedex 02 (FR)**

(54) **APPARATUS AND METHOD FOR CONTROLLING UWB DEVICE**

(57)    According to an embodiment, provided is an apparatus for controlling a UWB device, the apparatus comprising: a communication unit for receiving a plurality of time of flight (TOF) values for a UWB signal from a plurality of anchors that are installed in a vehicle and perform UWB communication with a digital key; a calculation unit for calculating distance values between the plurality of anchors and the digital key by using the plurality of received TOF values, and calculating location information about the digital key by using the distance values; and a control unit for switching the operation mode of at least one anchor among the plurality of anchors to a radar operation mode according to the location information about the digital key.

FIG. 6

# Description

[Technical Field]

One embodiment of the present invention relates to an apparatus and method for controlling an ultra-wideband (UWB) device.

[Background Art]

To provide local-based services (LBS), technologies, such as Global Positioning System (GPS), Wi-Fi, Bluetooth, etc., are being used, and these technologies have limitations in achieving precise positioning, but there are advantages in that a ultra-wideband (UWB) technology (6 to 8 GHz and a bandwidth of 500 MHz or more) provides a wide frequency band and low-power communication and enables high-accuracy positioning within an error range of several tens of centimeters.

Conventional GPS and mobile network-based position tracking technologies have error ranges of 5 to 50 meters and 50 to 200 meters, respectively, and in the case of GPS, in dense urban areas, obstacles can occur in the reception of signals transmitted from satellites.

Low-cost position tracking is possible in the case of Wi-Fi, but its frequency band is narrow, and thus there is a limit for channel splitting when the number of tracking targets increases. In addition, mobile devices can be disconnected from fixed Wi-Fi access points (APs).

Bluetooth allows for the deployment of multiple sensors at low cost, but its high communication latency is high, and thus it is unsuitable for real-time position tracking in dynamic environments.

UWB uses a time of flight (TOF) technology to calculate a distance between communicating entities by multiplying a signal arrival time between the communicating entities by the speed of light.

UWB uses a TOF technology in a band of 6 to 8 GHz with a bandwidth of 500 MHz or more to calculate a distance between communicating entities by multiplying a signal arrival time between the communicating entities by the speed of light.

Unlike Wi-Fi and Bluetooth, UWB uses a wide frequency bandwidth and can transmit a large amount of data at high data transmission rates while consuming low power.

Since UWB uses only distance data acquired through ranging technology for positioning, positioning performance can be degraded depending on errors in distance data. In addition, the physical characteristics, possession state, surrounding environment, etc., of a digital key holder can affect signals, thereby degrading performance.

[Detailed Description of Invention]

[Technical Problem]

The technical problem to be achieved by the present invention is to provide an apparatus and method for controlling an ultra-wideband (UWB) device, which may selectively perform a positioning function and a radar function using the UWB device.

[Technical Solution]

According to an embodiment, there is provided an apparatus for controlling an ultra-wideband (UWB) device, which includes a communication unit configured to receive a plurality of time of flight (TOF) values for a UWB signal from a plurality of anchors which are installed in a vehicle and perform UWB communication with a digital key, a calculation unit configured to calculate distance values between the plurality of anchors and the digital key using the plurality of received TOF values and calculate position information about the digital key using the distance values, and a control unit configured to switch an operation mode of at least one anchor among the plurality of anchors into a radar operation mode according to the position information about the digital key.

In a situation in which the digital key approaches the vehicle, when a distance between the digital key and the vehicle is less than or equal to a preset first reference distance, the control unit may switch at least two anchors closest to the digital key into the radar operation mode.

The control unit may collect information from the anchors switched into the radar operation mode and perform zone detection.

The control unit may collect information from the anchors switched into the radar operation mode and perform an opening and closing operation of a trunk.

In a situation in which the digital key moves away from the vehicle, when a distance between the digital key and the vehicle is greater than or equal to a preset second reference distance, the control unit may switch an anchor positioned inside the vehicle into the radar operation mode.

The control unit may collect information from the anchor switched into the radar operation mode and perform a vehicle interior object detection operation.

When the digital key moves from inside to outside the vehicle, the control unit may switch the plurality of anchors into the radar operation mode.

The control unit may collect information from the anchors switched into the radar operation mode and perform a remote smart parking assist (RSPA) operation.

Each of the plurality of anchors may include a plurality of antennas, in a positioning mode for determining the TOF values, one of the plurality of antennas may operate as a transceiver (TRX) antenna, and the remaining antennas may operate as receiver (RX) antennas, and in the radar operation mode, one of the plurality of antennas may operate as a transmitter (TX) antenna, and the remaining antennas may operate as RX antennas.

According to an embodiment, there is provided a method of controlling a UWB device, which includes receiving, by a communication unit, a plurality of time of flight (TOF) values for UWB signals from a plurality of anchors which perform UWB communication with a digital key, calculating, by a calculation unit, distance values between the plurality of anchors and the digital key using the plurality of received TOF values, calculating, by the calculation unit, position information of the digital key using the distance values, and switching, by a control unit, at least one of the plurality of anchors into a radar operation mode based on the position information of the digital key.

[Advantageous Effects]

An apparatus and method for controlling a UWB device according to an embodiment can selectively perform a positioning function and a radar function by controlling the UWB device.

In addition, various additional operations can be performed depending on a relative distance and position between a vehicle and a digital key.

[Description of Drawings]

FIG. 1 is a conceptual diagram of an ultra-wideband (UWB) system according to an embodiment.
FIG. 2 is a view illustrating a communication process between a plurality of UWB devices.
FIG. 3 is a block diagram of a UWB device (10) according to the embodiment.
FIG. 4 illustrates a ranging process of a processor according to the embodiment.
FIG. 5 is a block diagram schematically illustrating the UWB device operating as an anchor according to the embodiment.
FIG. 6 is a block diagram of an apparatus for controlling a UWB device according to the embodiment.
FIG. 7 is a view for describing an operation of controlling a vehicle door according to embodiments.
FIGS. 8 to 12 are conceptual diagrams for describing an operation of an apparatus for controlling a UWB device according to embodiments.
FIGS. 13 to 16 are operational flowcharts of the apparatus for controlling a UWB device according to the embodiments.

[Modes of the Invention]

Hereinafter, exemplary embodiments of the present invention will be described in detail with reference to the accompanying drawings.

However, the technical spirit of the present invention is not limited to any of the described embodiments, but may be implemented in various different forms, and one or more of the components among the embodiments may be used by being selectively coupled or substituted without departing from the scope of the technical spirit of the present invention.

In addition, terms (including technical and scientific terms) used in embodiments of the present invention may be construed with meanings that may be generally understood by those skilled in the art to which the present invention pertains unless explicitly specifically defined and described, and the meanings of commonly used terms, such as terms defined in a dictionary, may be construed in consideration of contextual meanings of related technologies.

In addition, the terms used in the embodiments of the present invention are for describing the embodiments and are not intended to limit the present invention.

In the specification, a singular form may include a plural form unless otherwise specified in the phrase, and when described as "at least one (or one or more) of A, B, and C," one or more among all possible combinations of A, B, and C may be included.

In addition, terms such as "first," "second," "A," "B," "(a)," "(b)," and the like may be used to describe components of the embodiments of the present invention.

These terms are only for the purpose of distinguishing one component from another component, and the nature, sequence, order, and the like of the corresponding components are not limited by these terms.

In addition, when a certain component is described as being "connected," "coupled," or "joined" to another component, it may include a case in which the certain component is directly connected, coupled, or joined to another component, but also a case in which the certain component is "connected," "coupled," or "joined" to another component by still another component present between the certain component and another component.

In addition, when a certain component is described as being formed or disposed on "on (above)" or "below (under)" another component, the terms "on (above)" or "below (under)" may include not only a case in which two components are in direct contact with each other, but also a case in which one or more other components are formed or disposed between the two components. In addition, when described as "on (above) or below (under)," it may include the meaning of not only an upward direction but also a downward direction based on one component.

Hereinafter, various embodiments will be described in detail with reference to the accompanying drawings, in which the same or corresponding components are denoted with the same reference numeral throughout the drawings, and overlapping descriptions thereof will be omitted.

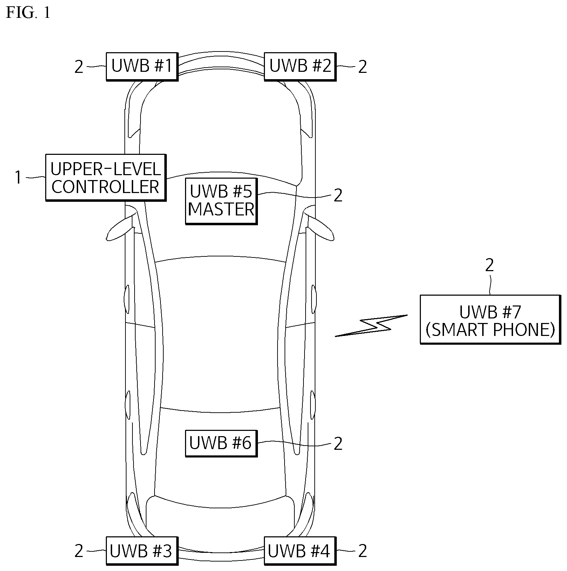

FIG. 1 is a conceptual diagram of an ultra-wideband (UWB) system according to an embodiment.

Referring to FIG. 1, in an embodiment, a plurality of UWB devices UWB#1 to #6, which perform UWB communication with a digital key UWB#7, may be mounted in a vehicle.

Mounting positions of the UWB devices UWB#1 to #6 may be determined, for example, according to UWB frequency characteristics. In an embodiment, two UWB devices may be mounted in a front bumper. Specifically, based on the viewpoint of a driver in the vehicle, the UWB device UWB#2 is mounted on a right side in the front bumper, and the UWB device UWB#1 is mounted on a left side in the front bumper.

Two UWB devices are mounted inside a rear bumper. Specifically, based on the viewpoint of the driver, the UWB device UWB#4 is mounted on the right side inside a rear bumper, and the UWB device UWB#3 is mounted on a left side inside the rear bumper.

Two UWB devices are mounted on an interior roof (headlining) of the vehicle. Specifically, based on the viewpoint of the driver, the UWB device UWB#5 is mounted between a driver's seat and a front passenger's seat, and the UWB device UWB#6 is mounted above a rear seat.

A UWB system according to the embodiment operates such that the UWB devices UWB#1 to #6 mounted in the vehicle perform a positioning function for the digital key UWB#7, and at the same time, some UWB devices perform various functions by switching into a radar mode and operating based on relative distances and positions from the digital key UWB#7.

UWB may refer to a short-range, high-speed wireless communication technology that uses a wide frequency band of several GHz or more, a low spectral density, and a short pulse width (1 to 4 nsec) in a baseband mode. The UWB may also refer to a band to which UWB communication is applied.

A UWB device 2 according to embodiments may include a fixed terminal implemented as a computer device or a mobile terminal and communicate with other devices and/or servers using a wireless or wired communication method. For example, the UWB device 2 may include a smartphone, a mobile terminal, a laptop computer, a digital broadcasting terminal, a personal digital assistant (PDA), a portable multimedia player (PMP), a navigation device, a slate PC, a tablet PC, a desktop computer, a digital TV, a refrigerator, an artificial intelligence speaker, a wearable device, a projector, a digital key, a smart car, a printer, a vehicle console, a control device for controlling at least some functions of a vehicle, etc., but is not limited thereto.

In an embodiment, a digital key or a smartphone and a UWB device installed in a vehicle will be described as examples.

The UWB device 2 according to the embodiment may perform device-to-device (D2D) communication. The D2D communication refers to a method in which geographically close devices communicate directly without any infrastructure, such as a base station. In the D2D communication, devices may communicate in a one-to-one, one-to-many, or many-to-many manner. The D2D communication may use unlicensed frequency bands, such as Wi-Fi Direct and Bluetooth. Alternatively, the D2D communication may use licensed frequency bands, thereby improving frequency utilization efficiency in cellular systems. Although the D2D communication is sometimes used in a limited sense to refer to communication between things or intelligent machine communication, the D2D communication according to the present embodiment may include communication not only between simple devices provided with communication functions, but also between various types of devices having a communication function, such as a smartphone or a personal computer.

In an embodiment, an upper-level controller 1 may determine positions of a plurality of UWB devices using ranging result values. The upper-level controller 1 may classify each UWB device 2 as one of a plurality of nodes and analyze a position of each UWB device 2 based on a distance relationship between the nodes. The upper-level controller 1 may set the plurality of UWB devices 2 mounted in the vehicle as anchor nodes and set the UWB device 2 mounted on the digital key as a tag node and determine the position of each UWB device 2 based on a distance relationship between the anchor node and the tag node.

In an embodiment, one of the plurality of UWB devices 2 mounted in the vehicle may be designated as a master UWB device UWB#5, and the upper-level controller 1 may be configured as a vehicle electronic control unit (ECU) or a body domain controller (BDC).

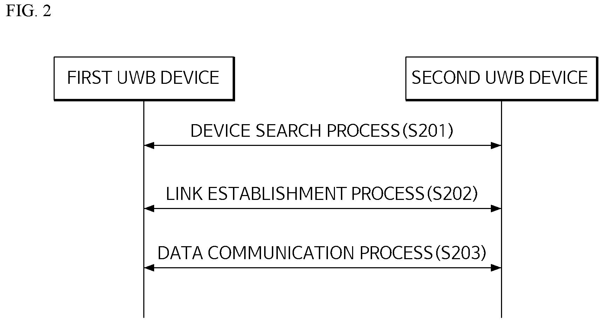

FIG. 2 is a view illustrating a communication process between a plurality of UWB devices.

A first UWB device and a second UWB device may communicate through a device search process, a link establishment process, and a data communication process.

During the device search process, each of the first UWB device and the second UWB device may search nearby UWB devices for other UWB devices capable of D2D communication. Accordingly, each of the first UWB device and the second UWB device may determine whether to establish a link for D2D communication. For example, the first UWB device may transmit a searching signal to enable the second UWB device to search for the first UWB device. In addition, the first UWB device may receive the searching signal transmitted by the second UWB device to determine that other electronic devices capable of D2D communication are detected within a D2D communication range (S201).

During the link establishment process, each of the first UWB device and the second UWB device may establish a link for data transmission with the UWB device, to which data is transmitted, among the found UWB devices during the device search process. For example, the first UWB device may establish a link for data transmission with the found second UWB device during the device search process (S202).

During the data communication process, each of the first UWB device and the second UWB device may transmit and receive data with UWB devices with which a link is established during the link establishment process. For example, the first UWB device may transmit and receive data with the second UWB device through the link established during the link establishment process (S203).

Various embodiments of the present application relate to medium access control (MAC) based on the D2D communication, and for MAC, a distance between UWB devices needs to be measured. In this case, UWB ranging technology may be used to measure a distance between electronic devices.

In an embodiment, the ranging refers to measuring a distance between a UWB device (fob) and the other UWB device (anchor), a data structure complies with the IEEE802.15.4z standard, and about 200 microseconds ($\mu$s) may be required to transmit one packet.

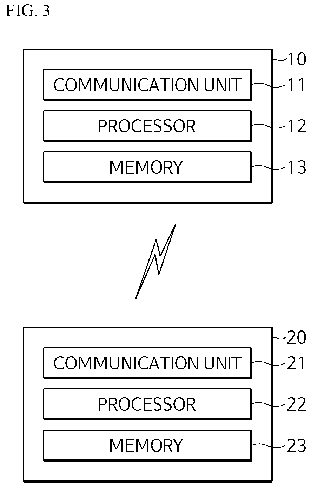

FIG. 3 is a block diagram of a UWB device 10 according to the embodiment. Referring to FIG. 3, the UWB device 10 according to the embodiment may perform ranging with the other UWB device 20 through UWB communication and include a communication unit 11, at least one processor 12, and a memory 13 having a built-in UWB ranging program. In addition, the other UWB device 20 may also include a communication unit 21, at least one processor 22, and a memory 23.

In an embodiment, the UWB device 10 is mounted in the vehicle and may serve as an anchor, and the other UWB device 20 is mounted on the digital key and may serve as a fob.

The communication unit 11 may perform data communication with the upper-level controller 1 to transmit ranging results and receive localization results from the upper-level controller 1. The communication unit 11 may perform data communication with the upper-level controller 1 via an L-controller area network (CAN) bus and transmit ranging results to the upper-level controller 1. In addition, the communication unit 11 may receive the localization results from the upper-level controller 1 via the L-CAN bus.

The processor 12 may perform ranging with the other UWB device 20 through the UWB communication and measure a distance to the other UWB device 20.

For example, when using a digital key stored on a smartphone to open or close a vehicle door, the vehicle may use a plurality of UWB devices 10 (e.g., eight UWB communication modules) to measure distances between the smartphone and the vehicle and then estimate a position of the smartphone based on a result of the measurement. The vehicle may automatically open the vehicle door when the smartphone is detected within a predetermined distance from the vehicle, thereby increasing user convenience. The vehicle and the smartphone may use multicast ranging or broadcast ranging.

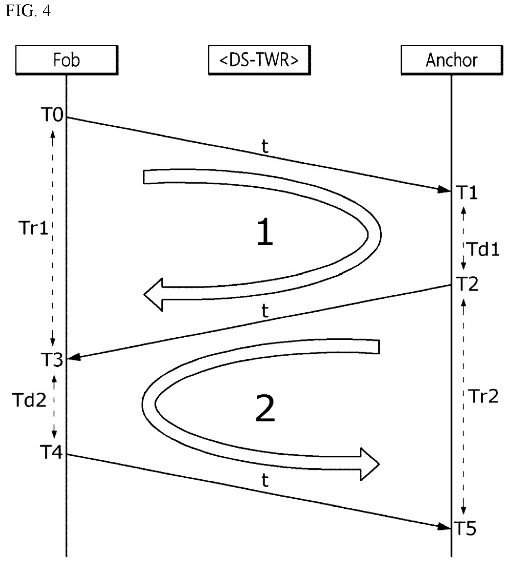

FIG. 4 illustrates a ranging process of a processor according to the embodiment.

FIG. 4 illustrates a two way ranging (TWR) method including a double sided (DS) TWR and a single sided (SS) TWR.

The ranging refers to measuring a distance between one fob and one anchor, a data structure complies with the IEEE802.15.4z standard, and about 200 microseconds ($\mu$s) may be required to transmit one packet.

In an embodiment, the UWB device 10 may operate as an anchor. When the UWB device 10 according to the embodiment operates as an anchor, the other UWB device 20 may operate as a fob.

A slot may be defined as a time required between one signal transmission (or reception) and a subsequent transmission (or reception) of a fob or anchor.

First, the fob transmits a poll packet and records a timestamp, $T_0$.

Next, the anchor receives the poll packet and records $T_1$.

Next, the anchor receives a signal, spends a time $T_{d1}$ to generate a response packet, transmits a response message, and records $T_2$.

Next, the fob receives the response message and records $T_3$.

Next, the fob receives the signal and spends a time $T_{d2}$ to generate a final message.

Next, the fob transmits the final message and records $T_4$, and the anchor receives the final message and records $T_5$.

A distance value between the fob and the anchor may be calculated according to Equation 1 below.

$$[\text{Equation 1}]$$

$$R = C \times \frac{(T_{r1} - T_{d1}) - (T_{r2} - T_{d2})}{3}$$

(In Equation 1, R denotes a distance between a fob and an anchor, and C denotes the speed of light.)

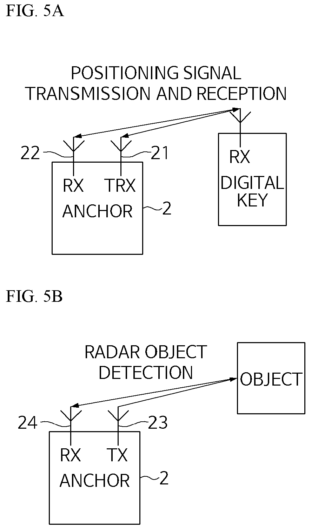

FIG. 5 is a block diagram schematically illustrating the UWB device operating as an anchor according to the embodiment.

Referring to FIG. 5, in an embodiment, each of the plurality of UWB devices 2 may perform a positioning function and a radar function. The positioning function may refer to a function of determining a position of a digital key by measuring time of arrival (TOA), time difference of arrival (TDOA), received signal strength (RSS), etc., through two-way communication between the plurality of UWB devices and the digital key. The radar function may be a function of detecting an object by analyzing the waveform of a signal that is transmitted from the UWB device 2 and reflected from the object to return to the UWB device 2.

To this end, each UWB device 2 operating as an anchor includes a plurality of antennas 21 to 24, and in a positioning mode for positioning a TOF value, one of the plurality of antennas may operate as a transceiver (TRX) antenna 21, and the remaining antennas may operate as receiver (RX) antennas 22, and in a radar operating mode, one of the plurality of antennas may operate as a transmitter (TX) antenna 23, and the remaining antennas may operate as RX antennas 23.

In FIG. 5A, the TRX antenna 21 and the RX antenna 22 activated in the positioning mode may measure a distance to a digital key based on a UWB signal received from the digital key and generate a TOF value. The generated TOF value may be transmitted to the communication unit through CAN communication.

In FIG. 5B, the TX antenna 23 and the RX antenna 24 activated in the UWB radar mode may have a signal transmitted from the TX antenna 23, reflected from an object, and received by the receiver antenna and generate a detection signal for detecting the presence of the object. The detection signal may be transmitted to the communication unit through CAN communication.

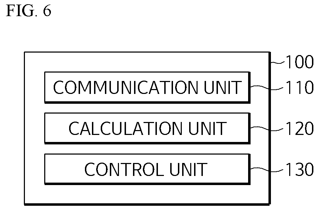

FIG. 6 is a block diagram of an apparatus for controlling a UWB device according to the embodiment.

Referring to FIG. 6, the apparatus for controlling a UWB device according to the embodiment may include a communication unit, a calculation unit, and a control unit.

In an embodiment, the positioning device 100 may be configured as an upper-level controller, such as an ECU or a BDC.

The positioning device 100 may receive a plurality of TOF values for UWB signals between a plurality of anchors and a digital key and use these values to determine a position of the digital key.

The communication unit 110 may receive the plurality of TOF values for the UWB signals from the plurality of anchors that are mounted in the vehicle and perform UWB communication with the digital key. The communication unit 110 may communicate with the plurality of anchors according to an in-vehicle network (IVN) communication method. The IVN communication method may be, for example, CAN, CAN flexible data rate (CAN-FD), FlexRay, local interconnect network (LIN), single edge nibble transmission (SENT), peripheral sensor interface 5 (PSI5) communication, etc., but is not particularly limited, and in an embodiment, the description will be limited to CAN as the IVN communication method.

The communication unit 110 may receive the plurality of TOF values through the device search process, the link establishment process, and the data communication process. The communication unit 110 may perform data communication with the plurality of anchors, receive ranging results, and calculate and transmit localization results.

The calculation unit 120 may use the plurality of received TOF values to calculate distance values between the plurality of anchors and the digital key and use the distance values to calculate position information of the digital key.

The calculation unit 120 may use the plurality of received TOF values to calculate the distance values between the plurality of anchors and the digital key. The calculation unit 120 may calculate the distance values between the plurality of anchors and the digital key using the UWB ranging technology. The calculation unit 120 may calculate the position information of the digital key by applying trilateration technology to the distance values between the plurality of anchors and the digital key.

The position information of the digital key may be used for automatic vehicle unlocking control.

The control unit 130 may switch at least one of the plurality of anchors into the radar operation mode based on the position information of the digital key.

The control unit 130 may control and manage the operations of the plurality of anchors, and at the same time, determine the position of the digital key based on various types of information (such as TOA, TDOA, RSS, etc.) provided from the plurality of anchors. To this end, the control unit 130 may exchange various types of information in the form of messages and signals with the plurality of anchors using CAN communication.

In addition, the control unit 130 may process user authentication. To this end, the control unit 130 may exchange various types of information in the form of messages and signals with a Bluetooth low energy (BLE) module, which performs BLE communication with the digital key, using CAN communication.

In addition, the control unit 130 may be woken up in response to a wake-up signal from the BLE module for user authentication or other purposes.

The control unit 130 may generate control signals for controlling the opening and closing of vehicle doors or the start of the vehicle based on the positioning results of the digital key and user detection information.

The control unit 130 may provide the control signals to a door control unit or an ignition control unit according to the CAN communication method.

In addition, the control unit 130 may generate control signals for switching into the positioning mode or the radar operation mode of the plurality of anchors based on the positioning results of the digital key and transmit the control signals to each anchor.

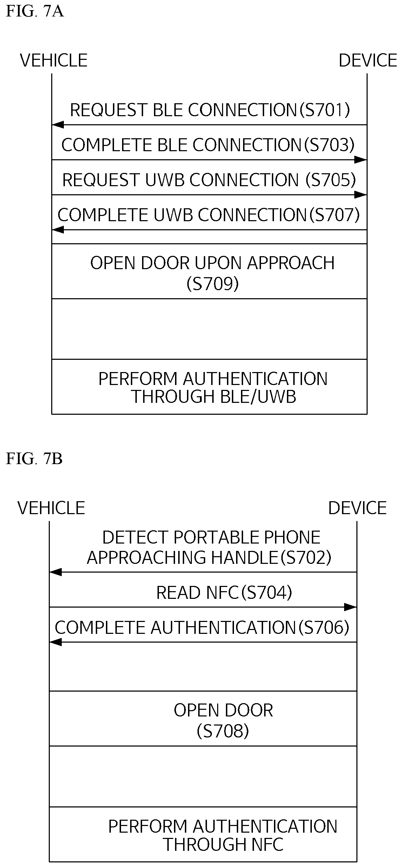

FIG. 7A is a view for describing an operation of controlling a vehicle door according to an embodiment.

Referring to FIG. 7A, when a device including a digital key approaches a vehicle, the vehicle transmits a BLE connection request signal to a master anchor (S701).

The master anchor completes user authentication in response to the BLE connection request signal and then transmits a BLE connection completion signal to the device (S703).

Next, a plurality of anchors mounted in the vehicle transmit a UWB connection request signal to the device (S705).

Next, the device authenticates the UWB connection request signal to establish a link for data transmission and transmits a UWB connection completion signal to the plurality of anchors (S707).

Next, the plurality of anchors and the device perform UWB ranging, and the upper-level controller of the vehicle performs a control operation of automatically opening the vehicle doors when the device approaches (S709).

FIG. 7B is a view for describing an operation of controlling a vehicle door according to another embodiment.

Referring to FIG. 7B, when a device having an NFC function approaches a vehicle door, an NFC reader of the vehicle detects the approach and authenticates an NFC signal of the device (S702 to S704).

Next, when the NFC signal is authenticated, the upper-level controller of the vehicle performs a control operation of automatically opening the vehicle door (S706 to S708).

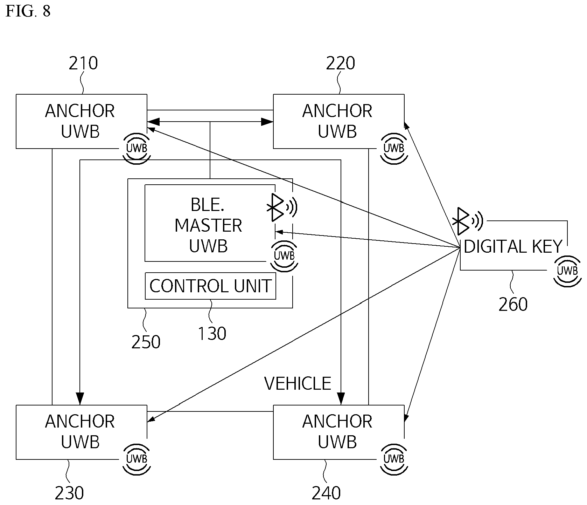

FIG. 8 is a conceptual diagram for describing the operation of the apparatus for controlling a UWB device according to the embodiment. FIG. 8 illustrates an operation in which all anchors 210 to 250 mounted in a vehicle operate in a positioning mode to automatically control the opening and closing of a vehicle door based on a position of a digital key 260.

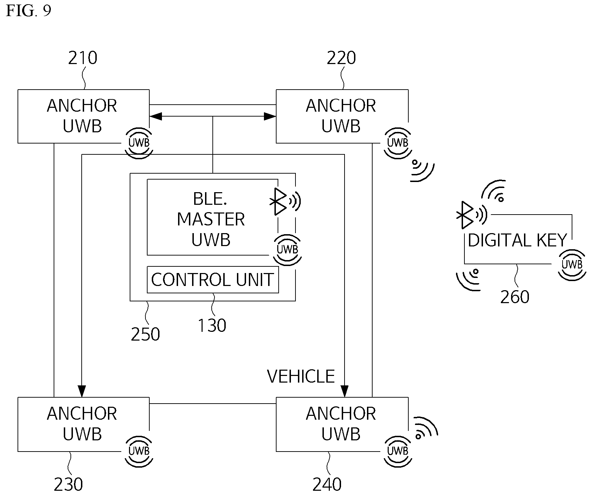

FIG. 9 is a conceptual diagram for describing the operation of an apparatus for controlling a UWB device according to another embodiment. Referring to FIG. 9, in a situation in which the digital key 260 approaches the vehicle, when a distance between the digital key 260 and the vehicle is less than or equal to a first reference distance, the control unit 130 may switch at least two anchors 220 and 240 closest to the digital key 260 into the radar operation mode.

For example, the first reference distance may be set to 2 meters, and the control unit 130 may determine whether the digital key 260 approaches the vehicle using position information of the digital key 260 calculated by time zone. When the position of the digital key 260 approaching the vehicle is detected within the first reference distance from the vehicle, the control unit 130 may switch the at least two anchors 220 and 240 closest to the digital key 260 into the radar operation mode.

The control unit 130 may collect information from the anchors 220 and 240 switched into the radar operation mode to perform zone detection. The anchors 220 and 240 switched into the radar operation mode may transmit radar signals in a designated direction and detect an object using the radar signals reflected from the object. In addition, the control unit 130 may calculate a distance to the object using transmission and reception information of the radar signals received from the anchors 220 and 240 in the radar operation mode. The control unit 130 may calculate the distance to the object using time difference information between the transmitted radar signal and the received radar signal.

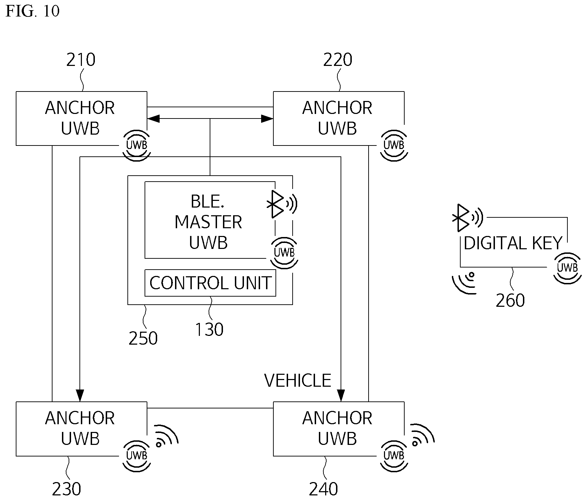

FIG. 10 is a conceptual diagram for describing the operation of an apparatus for controlling a UWB device according to another embodiment. Referring to FIG. 10, the control unit 130 may collect information from the anchors 230 and 240 switched into the radar operation mode and perform an opening and closing operation of a trunk. When the digital key 260 is positioned at the rear of the vehicle, the control unit 130 may switch the anchors 230 and 240 disposed on both sides of a rear bumper of the vehicle into the radar operation mode.

The control unit 130 may receive a signal that detects whether an object is present behind the vehicle from the anchors 230 and 240 switched into the radar operation mode. In addition, the control unit 130 may calculate a distance to the object using transmission and reception information of the radar signals received from the anchors 230 and 240 in the radar operation mode. The control unit 130 may activate a smart trunk function when the distance to the object is detected within a preset trunk operation reference distance. That is, the control unit 130 may transmit a control signal to a trunk control device (not illustrated), and the trunk control device may control the trunk to automatically open after outputting a preset number of warning sounds.

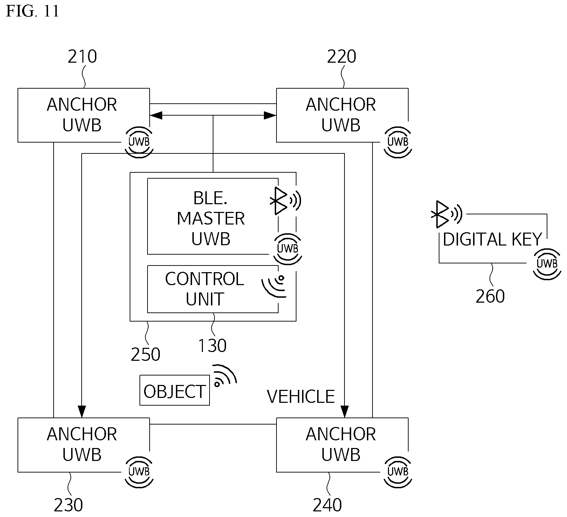

FIG. 11 is a conceptual diagram for describing the operation of an apparatus for controlling a UWB device according to another embodiment. Referring to FIG. 11, in a situation in which the digital key 260 moves away from the vehicle, when the distance between the digital key 260 and the vehicle is greater than or equal to a preset second reference distance, the control unit 130 may switch the anchor 250 positioned inside the vehicle into the radar operation mode.

The control unit 130 may determine whether the digital key 260 moves away from the vehicle using the position information of the digital key 260 calculated by time zone. The control unit 130 may switch the anchor 250 positioned inside the vehicle into the radar operation mode when the position of the digital key 260 moving away from the vehicle is detected beyond a second reference distance range from the vehicle.

The control unit 130 may collect information from the anchor 250 switched into the radar operation mode and perform a vehicle interior object detection operation. When an object is detected inside the vehicle, the control unit 130 may transmit a warning signal to the digital key 260.

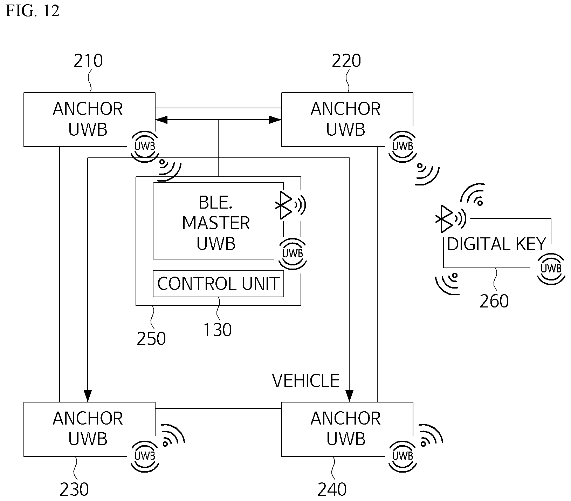

FIG. 12 is a conceptual diagram for describing the operation of an apparatus for controlling a UWB device according to yet another embodiment. Referring to FIG. 12, when the digital key 260 moves from the interior to the exterior of the vehicle, the control unit 130 may switch a plurality of anchors 210 to 240 directed to the outside of the vehicle into the radar operation mode.

The control unit 130 may collect information from the anchors 210 to 240 switched into the radar operation mode and perform a remote smart parking assist (RSPA) operation. The anchors 210 to 240 switched into the radar operation mode may detect obstacles in a designated area to search for possible parking spaces, and after searching, select a parking space and determine surrounding conditions, a parking type, etc. The control unit 130 may perform parking by moving forward and rearward according to the operation of the digital key 260 outside the vehicle.

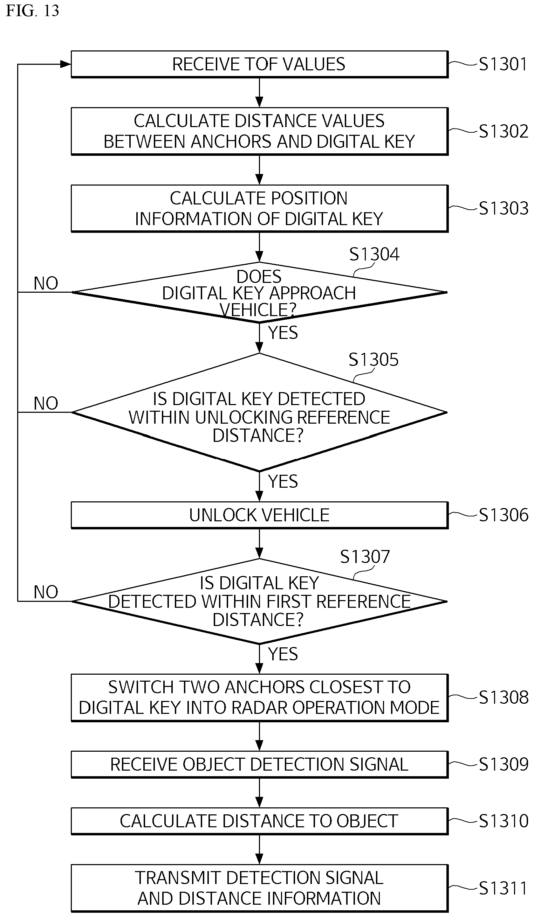

FIG. 13 is an operational flowchart of the apparatus for controlling a UWB device according to the embodiment.

First, the communication unit may receive a plurality of TOF values for UWB signals from a plurality of anchors that are mounted in the vehicle and perform UWB communication with the digital key (S1301).

Next, the calculation unit may use the plurality of received TOF values to calculate distance values between the plurality of anchors and the digital key (S1302).

Next, the calculation unit may use the plurality of distance values to calculate position information of the digital key (S1303).

Next, the control unit may determine whether the digital key approaches the vehicle. The control unit may use the position information of the digital key calculated by time zone to determine whether the digital key approaches the vehicle (S1304).

Next, when the position information of the digital key is detected within a preset unlocking reference distance from the vehicle, the control unit may transmit an unlock signal to the vehicle ECU or BDC to automatically unlock the vehicle (S1305 and S1306).

Next, the control unit may determine whether the digital key approaching the vehicle is detected within the first reference distance from the vehicle (S1307).

When the digital key is detected within the first reference distance from the vehicle, the control unit may switch at least two anchors closest to the digital key into the radar operation mode (S1308).

Next, the anchors switched into the radar operation mode may transmit radar signals in the designated direction and detect an object using the radar signals reflected from the object. The object detection signal may be transmitted to the control unit (S1309).

Next, the control unit may calculate the distance to the object using the transmission/reception information of the radar signal received from the anchor in the radar operation mode (S1310).

Next, the control unit may transmit the object detection signal and distance information to the digital key (S1311).

In this case, the first reference distance may be set to be shorter than the unlocking reference distance. That is, when the digital key approaches the vehicle, the control unit may primarily use TOF information of the anchors to unlock the vehicle, and when the vehicle is unlocked and then the digital key is detected within the first reference distance, the control unit may switch the at least two anchors closest to the digital key into the radar operation mode to control the anchors to perform a zone detection function.

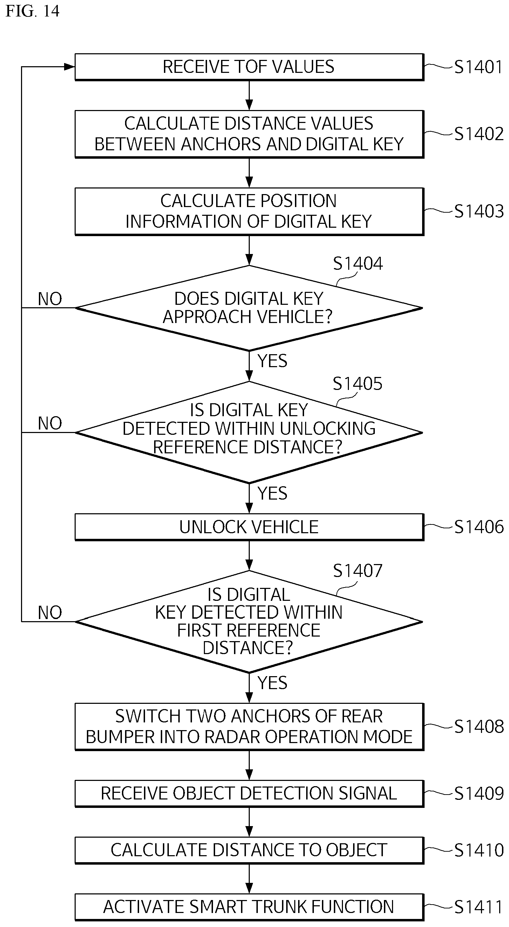

FIG. 14 is an operational flowchart of the apparatus for controlling a UWB device according to another embodiment.

First, the communication unit may receive a plurality of TOF values for UWB signals from a plurality of anchors that are mounted in the vehicle and perform UWB communication with the digital key (S1401).

Next, the calculation unit may use the plurality of received TOF values to calculate distance values between the plurality of anchors and the digital key (S1402).

Next, the calculation unit may use the plurality of distance values to calculate position information for the digital key (S1403).

Next, the control unit may determine whether the digital key approaches the vehicle. The control unit may use the position information of the digital key calculated by time zone to determine whether the digital key approaches the vehicle (S1404).

Next, when the position information of the digital key is detected within a preset unlocking reference distance from the vehicle, the control unit may transmit an unlock signal to the vehicle ECU or BDC to automatically unlock the vehicle (S1405 and S 1406).

Next, the control unit may determine whether the digital key approaching the vehicle is detected within the first reference distance from the vehicle (S1407).

When the digital key is detected within the first reference distance from the rear of the vehicle, the control unit may switch two anchors of a rear bumper closest to the digital key into the radar operation mode (S1408).

Next, the anchors of the rear bumper of the vehicle switched into the radar operation mode may transmit radar signals in the designated direction and detect an object using the radar signals reflected from the object. The object detection signal may be transmitted to the control unit (S1409).

Next, the control unit may calculate the distance to the object using the transmission/reception information of the radar signal received from the anchor in the radar operation mode (S1410).

The control unit may activate a smart trunk function when the distance to the object is detected within a preset trunk operation reference distance (S1411).

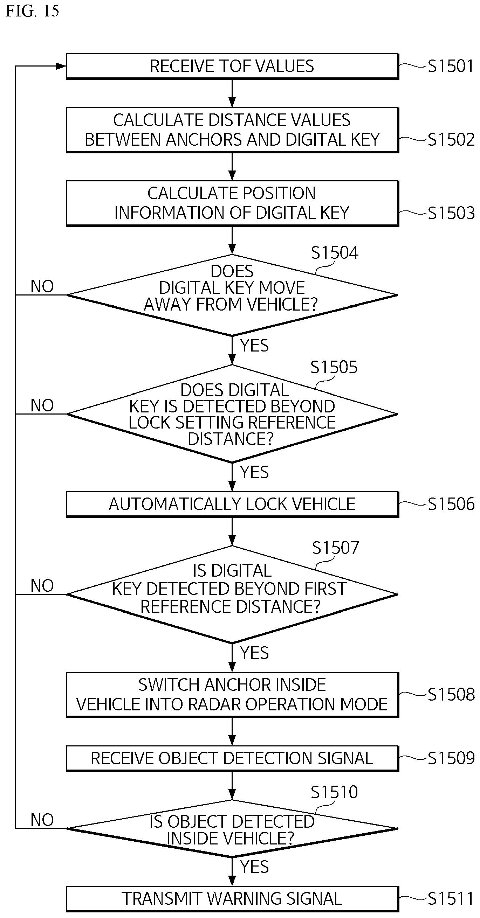

FIG. 15 is an operational flowchart of the apparatus for controlling a UWB device according to still another embodiment.

First, the communication unit may receive a plurality of TOF values for UWB signals from a plurality of anchors that are mounted in the vehicle and perform UWB communication with the digital key (S1501).

Next, the calculation unit may use the plurality of received TOF values to calculate distance values between the plurality of anchors and the digital key (S1502).

Next, the calculation unit may use the plurality of distance values to calculate position information of the digital key (S1503).

Next, the control unit may determine whether the digital key moves away from the vehicle. The control unit may use the calculated position information of the digital key to determine whether the digital key moves away from the vehicle (S1504).

Next, when the position information of the digital key is detected beyond a preset lock setting reference distance from the vehicle, the control unit may transmit a lock signal to the vehicle ECU or BDC to automatically lock the vehicle (S1505 and S1506).

Next, the control unit may determine whether the digital key moving away from the vehicle is detected beyond the second reference distance from the vehicle (S1507).

Next, when the digital key is detected beyond the second reference distance range from the vehicle, the control unit may switch the anchor positioned inside the vehicle into the radar operation mode (S1508).

Next, the control unit may collect information from the anchor switched into the radar operation mode and perform a vehicle interior object detection operation (S1509).

Next, when an object is detected inside the vehicle, the control unit may transmit a warning signal to the digital key (S1510 and S1511).

In this case, the second reference distance may be set to be greater than the lock setting reference distance. That is, when the digital key moves away from the vehicle, the control unit may primarily use TOF information of the anchors to lock the vehicle, and, when the vehicle is locked and then the digital is detected beyond the second reference distance, the control unit may switch the anchors inside the vehicle into the radar operation mode to control the anchors to perform an object detection function, such as detecting a child passenger, pet, etc., inside the vehicle.

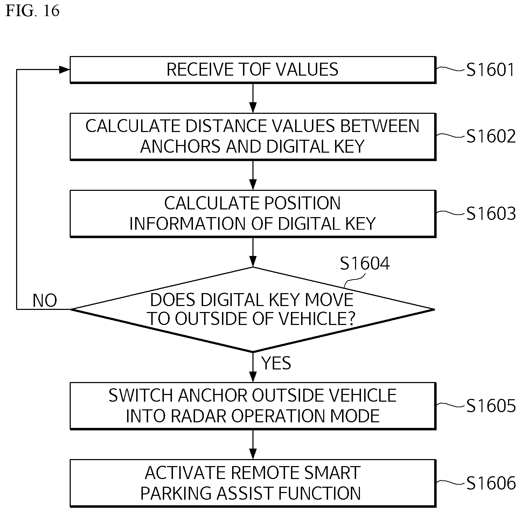

FIG. 16 is an operational flowchart of the apparatus for controlling a UWB device according to yet another embodiment.

First, the communication unit may receive a plurality of TOF values for UWB signals from a plurality of anchors that are mounted in the vehicle and perform UWB communication with the digital key (S1601).

Next, the calculation unit may use the plurality of received TOF values to calculate distance values between the plurality of anchors and the digital key (S1602).

Next, the calculation unit may use the plurality of distance values to calculate position information of the digital key (S1603).

Next, the control unit may determine whether the digital key moves from inside to outside of the vehicle (S1604).

When the digital key moves from inside to outside the vehicle, the control unit may switch the plurality of anchors into the radar operation mode (S1605).

Next, the control unit may collect information from the anchors switched into the radar operation mode and perform an RSPA operation (S1606).

The term "unit" used in the present embodiment means a software or hardware component such as a field programmable gate array (FPGA) or an application specific integrated circuit (ASIC), and the "unit" performs certain roles. However, the "unit" is not limited to software or hardware. The "unit" may be disposed in an addressable storage medium and configured to reproduce one or more processors. Accordingly, as an example, the "unit" includes components such as software components, object-oriented software components, class components, and task components, processes, functions, attributes, procedures, subroutines, segments of program code, drivers, firmware, microcode, circuits, data, databases, data structures, tables, arrays, and variables. Functions provided in the components and "units" may be combined into a smaller number of components and "units" or separated into additional components and "units." Additionally, the components and "units" may be implemented to reproduce one or more CPUs in a device or a security multimedia card.

Although the present invention has been described above with reference to various exemplary embodiments, those skilled in the art will understand that the present invention may be modified and changed variously without departing from the spirit and scope of the present invention as described in the appended claims.

## Claims

1. An apparatus for controlling an ultra-wideband (UWB) device, comprising:

   a communication unit configured to receive a plurality of time of flight (TOF) values for UWB signals from a plurality of anchors which are mounted in a vehicle and perform UWB communication with a digital key;
   a calculation unit configured to calculate distance values between the plurality of anchors and the digital key using the plurality of received TOF values and calculate position information of the digital key using the distance values; and
   a control unit configured to switch at least one of the plurality of anchors into a radar operation mode based on the position information of the digital key.

2. The apparatus of claim 1, wherein, in a situation in which the digital key approaches the vehicle, when a distance between the digital key and the vehicle is less than or equal to a preset first reference distance, the control unit switches at least two anchors closest to the digital key into the radar operation mode.

3. The apparatus of claim 2, wherein the control unit collects information from the anchors switched into the radar operation mode and performs zone detec-

**4.** The apparatus of claim 2, wherein the control unit collects information from the anchors switched into the radar operation mode and performs an opening and closing operation of a trunk.

**5.** The apparatus of claim 1, wherein, in a situation in which the digital key moves away from the vehicle, when a distance between the digital key and the vehicle is greater than or equal to a preset second reference distance, the control unit switches an anchor positioned inside the vehicle into the radar operation mode.

**6.** The apparatus of claim 5, wherein the control unit collects information from the anchor switched into the radar operation mode and performs a vehicle interior object detection operation.

**7.** The apparatus of claim 1, wherein, when the digital key moves from inside to outside the vehicle, the control unit switches the plurality of anchors into the radar operation mode.

**8.** The apparatus of claim 7, wherein the control unit collects information from the anchors switched into the radar operation mode and performs a remote smart parking assist (RSPA) operation.

**9.** The apparatus of claim 1, wherein each of the plurality of anchors includes a plurality of antennas,

in a positioning mode for determining the TOF values, one of the plurality of antennas operates as a transceiver (TRX) antenna, and the remaining antennas operate as receiver (RX) antennas, and
in the radar operation mode, one of the plurality of antennas operates as a transmitter (TX) antenna, and the remaining antennas operate as receiver (RX) antennas.

**10.** A method of controlling an ultra-wideband (UWB) device, comprising:

receiving, by a communication unit, a plurality of time of flight (TOF) values for UWB signals from a plurality of anchors which perform UWB communication with a digital key;
calculating, by a calculation unit, distance values between the plurality of anchors and the digital key using the plurality of received TOF values;
calculating, by the calculation unit, position information of the digital key using the distance values; and
switching, by a control unit, at least one of the plurality of anchors into a radar operation mode based on the position information of the digital key.

EP 4 756 478 A1

FIG. 1

11

FIG. 2

```
┌──────────────────┐                          ┌──────────────────────┐
│ FIRST UWB DEVICE │                          │  SECOND UWB DEVICE   │
└──────────────────┘                          └──────────────────────┘
         │          DEVICE SEARCH PROCESS(S201)          │
         │◄────────────────────────────────────────────►│
         │                                               │
         │        LINK ESTABLISHMENT PROCESS(S202)        │
         │◄────────────────────────────────────────────►│
         │                                               │
         │       DATA COMMUNICATION PROCESS(S203)         │
         │◄────────────────────────────────────────────►│
         │                                               │
```

FIG. 3

FIG. 4

FIG. 5A

POSITIONING SIGNAL
TRANSMISSION AND RECEPTION

FIG. 5B

RADAR OBJECT
DETECTION

FIG. 6

| | |
|---|---|
| COMMUNICATION UNIT | ~100 |
| | ~110 |
| CALCULATION UNIT | ~120 |
| CONTROL UNIT | ~130 |

FIG. 7A

VEHICLE                                                    DEVICE

REQUEST BLE CONNECTION(S701)

COMPLETE BLE CONNECTION(S703)

REQUEST UWB CONNECTION (S705)

COMPLETE UWB CONNECTION(S707)

OPEN DOOR UPON APPROACH
(S709)

PERFORM AUTHENTICATION
THROUGH BLE/UWB

FIG. 7B

VEHICLE                                                    DEVICE

DETECT PORTABLE PHONE
APPROACHING HANDLE(S702)

READ NFC(S704)

COMPLETE AUTHENTICATION(S706)

OPEN DOOR
(S708)

PERFORM AUTHENTICATION
THROUGH NFC

FIG. 8

FIG. 9

FIG. 10

FIG. 11

FIG. 12

FIG. 13

RECEIVE TOF VALUES — S1301

CALCULATE DISTANCE VALUES BETWEEN ANCHORS AND DIGITAL KEY — S1302

CALCULATE POSITION INFORMATION OF DIGITAL KEY — S1303

S1304 — DOES DIGITAL KEY APPROACH VEHICLE? — NO / YES

S1305 — IS DIGITAL KEY DETECTED WITHIN UNLOCKING REFERENCE DISTANCE? — NO / YES

UNLOCK VEHICLE — S1306

S1307 — IS DIGITAL KEY DETECTED WITHIN FIRST REFERENCE DISTANCE? — NO / YES

SWITCH TWO ANCHORS CLOSEST TO DIGITAL KEY INTO RADAR OPERATION MODE — S1308

RECEIVE OBJECT DETECTION SIGNAL — S1309

CALCULATE DISTANCE TO OBJECT — S1310

TRANSMIT DETECTION SIGNAL AND DISTANCE INFORMATION — S1311

FIG. 14

RECEIVE TOF VALUES — S1401

CALCULATE DISTANCE VALUES BETWEEN ANCHORS AND DIGITAL KEY — S1402

CALCULATE POSITION INFORMATION OF DIGITAL KEY — S1403

S1404

DOES DIGITAL KEY APPROACH VEHICLE? — NO

YES

S1405

IS DIGITAL KEY DETECTED WITHIN UNLOCKING REFERENCE DISTANCE? — NO

YES

UNLOCK VEHICLE — S1406

S1407

IS DIGITAL KEY DETECTED WITHIN FIRST REFERENCE DISTANCE? — NO

YES

SWITCH TWO ANCHORS OF REAR BUMPER INTO RADAR OPERATION MODE — S1408

RECEIVE OBJECT DETECTION SIGNAL — S1409

CALCULATE DISTANCE TO OBJECT — S1410

ACTIVATE SMART TRUNK FUNCTION — S1411

FIG. 15

```
┌──────────────────────────────────────┐
│         RECEIVE TOF VALUES           │──S1501
└──────────────────────────────────────┘
                    │
                    ▼
┌──────────────────────────────────────┐
│       CALCULATE DISTANCE VALUES      │
│    BETWEEN ANCHORS AND DIGITAL KEY   │──S1502
└──────────────────────────────────────┘
                    │
                    ▼
┌──────────────────────────────────────┐
│          CALCULATE POSITION          │
│      INFORMATION OF DIGITAL KEY      │──S1503
└──────────────────────────────────────┘
                    │
                    ▼
                                   S1504
              ◇ DOES ◇
    NO        DIGITAL KEY MOVE
◄─────────── AWAY FROM VEHICLE?
                    │ YES
                    ▼
                                   S1505
              ◇ DOES DIGITAL ◇
    NO        KEY IS DETECTED BEYOND
◄─────────── LOCK SETTING REFERENCE
              DISTANCE?
                    │ YES
                    ▼
┌──────────────────────────────────────┐
│       AUTOMATICALLY LOCK VEHICLE     │──S1506
└──────────────────────────────────────┘
                    │
                    ▼
                                   S1507
              ◇ IS DIGITAL ◇
    NO        KEY DETECTED BEYOND FIRST
◄─────────── REFERENCE DISTANCE?
                    │ YES
                    ▼
┌──────────────────────────────────────┐
│        SWITCH ANCHOR INSIDE          │
│   VEHICLE INTO RADAR OPERATION MODE  │──S1508
└──────────────────────────────────────┘
                    │
                    ▼
┌──────────────────────────────────────┐
│     RECEIVE OBJECT DETECTION SIGNAL  │──S1509
└──────────────────────────────────────┘
                    │
                    ▼
                                   S1510
              ◇ IS OBJECT DETECTED ◇
    NO        INSIDE VEHICLE?
◄───────────
                    │ YES
                    ▼
┌──────────────────────────────────────┐
│        TRANSMIT WARNING SIGNAL       │──S1511
└──────────────────────────────────────┘
```

FIG. 16

```
  ┌─────────────────────────────────────────┐
  │          RECEIVE TOF VALUES             │──S1601
  └─────────────────────────────────────────┘
                      │
                      ▼
  ┌─────────────────────────────────────────┐
  │  CALCULATE DISTANCE VALUES BETWEEN      │──S1602
  │        ANCHORS AND DIGITAL KEY          │
  └─────────────────────────────────────────┘
                      │
                      ▼
  ┌─────────────────────────────────────────┐
  │          CALCULATE POSITION             │──S1603
  │      INFORMATION OF DIGITAL KEY         │
  └─────────────────────────────────────────┘
                      │
                      ▼                    S1604
         ◇─────────────────────────────◇
   NO    │      DOES DIGITAL KEY MOVE   │
  ◄──────│      TO OUTSIDE OF VEHICLE?  │
         ◇─────────────────────────────◇
                      │ YES
                      ▼
  ┌─────────────────────────────────────────┐
  │     SWITCH ANCHOR OUTSIDE VEHICLE       │──S1605
  │       INTO RADAR OPERATION MODE         │
  └─────────────────────────────────────────┘
                      │
                      ▼
  ┌─────────────────────────────────────────┐
  │        ACTIVATE REMOTE SMART            │──S1606
  │      PARKING ASSIST FUNCTION            │
  └─────────────────────────────────────────┘
```

## INTERNATIONAL SEARCH REPORT

| International application No. |
|---|
| **PCT/KR2024/009285** |

| A. | CLASSIFICATION OF SUBJECT MATTER |
|---|---|

**G01S 5/02**(2010.01)i; **G01S 13/88**(2006.01)i; **B60R 25/01**(2013.01)i; **B60R 25/24**(2013.01)i; **B62D 15/02**(2006.01)i; **G01S 13/931**(2020.01)i

According to International Patent Classification (IPC) or to both national classification and IPC

| B. | FIELDS SEARCHED |
|---|---|

Minimum documentation searched (classification system followed by classification symbols)

G01S 5/02(2010.01); B60R 25/20(2013.01); B60R 25/24(2013.01); B60W 60/00(2020.01); G01S 13/88(2006.01); H01Q 5/25(2015.01); H04L 65/40(2022.01); H04W 4/80(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 차량(vehicle), 디지털 키(digital key), UWB(ultra wide band), 레이더(radar)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0029874 A (HYUNDAI MOTOR COMPANY et al.) 10 March 2022 (2022-03-10)<br>See paragraphs [0025]-[0046], [0055]-[0064] and [0081]-[0094], claim 1 and figures 1-7. | 1-3,5-10 |
| Y | | 4 |
| Y | KR 10-2023-0007895 A (HYUNDAI MOBIS CO., LTD.) 13 January 2023 (2023-01-13)<br>See paragraph [0060]. | 4 |
| A | KR 10-2023-0034061 A (HYUNDAI MOBIS CO., LTD.) 09 March 2023 (2023-03-09)<br>See paragraphs [0030]-[0067] and figures 1-3. | 1-10 |
| A | CN 113276881 A (FORD GLOBAL TECHNOLOGIES, LLC) 20 August 2021 (2021-08-20)<br>See paragraphs [0013]-[0049] and figures 1-2. | 1-10 |
| A | US 2021-0284098 A1 (APTIV TECHNOLOGIES LIMITED) 16 September 2021 (2021-09-16)<br>See paragraphs [0040]-[0041] and figure 8. | 1-10 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 October 2024** | **04 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/009285**

| Patent document cited in search report | | | Publication date (day/month/year) | Patent family member(s) | | | Publication date (day/month/year) |
|---|---|---|---|---|---|---|---|
| KR | 10-2022-0029874 | A | 10 March 2022 | CN | 114132288 | A | 04 March 2022 |
| | | | | US | 2022-0067402 | A1 | 03 March 2022 |
| KR | 10-2023-0007895 | A | 13 January 2023 | | None | | |
| KR | 10-2023-0034061 | A | 09 March 2023 | | None | | |
| CN | 113276881 | A | 20 August 2021 | US | 11586212 | B2 | 21 February 2023 |
| | | | | US | 2021-0255634 | A1 | 19 August 2021 |
| US | 2021-0284098 | A1 | 16 September 2021 | CN | 113386704 | A | 14 September 2021 |
| | | | | EP | 3879299 | A1 | 15 September 2021 |

Form PCT/ISA/210 (patent family annex) (July 2022)